# EUROPEAN PATENT SPECIFICATION

(11) **EP 3 350 004 B1**
(45) Date of publication and mention of the grant of the patent: **18.12.2024**
(21) Application number: 16846953.4
(22) Date of filing: 31.08.2016
(51) Int. Cl.: B60K 11/04, B60K 6/40, F01P 5/02, F01P 3/18, H01M 10/625, H01M 10/663, H01M 10/6563, H01M 10/6568, H01M 10/6569, H01M 10/667, H01M 10/66, H01M 10/617, H01M 10/613, B60K 6/22

(54) **A COOLING ARRANGEMENT FOR AN ELECTRIC POWER UNIT IN A VEHICLE**
KÜHLANORDNUNG FÜR EINE ELEKTRISCHE LEISTUNGSEINHEIT IN EINEM FAHRZEUG
AGENCEMENT DE REFROIDISSEMENT POUR UNE UNITÉ D'ALIMENTATION ÉLECTRIQUE DANS UN VÉHICULE

(30) Priority: 15.09.2015 SE 1551177
(43) Date of publication of application: 25.07.2018
(73) Proprietor: Scania CV AB, 151 87 Södertälje (SE)
(72) Inventor: KARDOS, Zoltan, 151 35 Södertälje (SE); HALL, Ola, 117 67 Stockholm (SE); MUSTONEN, Markus, 135 42 Tyresö (SE)
(74) Representative: Scania CV AB
(86) International application number: PCT/SE2016/050815
(87) International publication number: WO 2017/048172

(56) References cited:
- CN-A- 103 407 346
- DE-A1- 102008 011 225
- DE-A1- 102010 044 401
- DE-A1- 102011 090 147
- JP-A- 2010 235 001
- JP-A- H11 350 956
- US-A1- 2002 073 726
- US-A1- 2009 159 021
- US-A1- 2012 109 433
- US-A1- 2012 109 433
- US-A1- 2012 136 535
- US-A1- 2014 331 693

## Description

### BACKGROUND OF THE INVENTION AND PRIOR ART

The present invention relates to a cooling arrangement for an electric power unit in a vehicle according to the preamble of claim 1.

Hybrid vehicles may be powered by an electric power unit in combination with some other form power unit such as a combustion engine. The electric power unit may comprises an electric machine which alternately works as motor and generator, an electric energy storage for storing of electrical energy and power electronics for controlling the flow of electrical energy between the electrical energy store and the electric machine. The power electronics may include a DC converter and inverter for conducting electrical energy between the electrical energy storage and the electric machine. The electrical energy storage and power electronics are designed to operate within a specific temperature range. The electrical energy storage and the power electronics are heated during operation. A certain type of electrical energy storage should, for example, not be heated to a temperature above a maximum temperature of 40 ° C. The power electronics can be heated to a somewhat higher temperature. Consequently, it is important to cool the electrical energy storage and the power electronics during operation. Furthermore, the efficiency of the electrical energy storage and the efficiency of the power electronics are reduced than they have a too low temperature. Thus, it is also suitable to heat the electrical energy storage and the power electronics when they have a too low temperature.

DE 10 2012 024 080 A1 shows a vehicle powered by an electric motor. A low-temperature cooling circuit is used to cool a battery device supplying electric power to the electric motor. A high-temperature cooling circuit cools power electronics controlling the power supply to the electric motor. The low temperature cooling circuit is, via a heat exchanger, connectable to an AC circuit.

US2012/109433 is disclosing (figure 1) a cooling arrangement for an electric power unit in a vehicle with two cooling systems and two radiator fans.

### SUMMARY OF THE INVENTION

The object of the present invention is to provide a cooling arrangement providing an efficient temperature control of an electric energy storage and power electronics in a vehicle. A further object is to provide a cooling arrangement which can be modified in a simple manner. A further object is to provide a cooling arrangement operating in an energy efficient manner.

The above mentioned object is achieved by the arrangement according to the characterized part of claim 1. The power electronics is cooled by a first cooling system and the electric energy storage is cooled by a second cooling system. The use of two different cooling systems makes it easy to provide an individual cooling of the electric energy storage and the power electronics. The cooling arrangement comprises two radiator fans providing a first cooling air flow and a second air flow. The first cooling system and the second cooling system comprise radiators and the refrigeration system comprises a condenser which can be arranged in said two cooling air flows in different combinations. This possibility makes it possible to modify the cooling arrangement in a simple manner and adapt it to different types of vehicles and climate where the vehicle is to be used. Furthermore, it is possible to distribute the required cooling of the electric energy storage on the second cooling system and the refrigeration system in a variable manner. The cooling effect of the second cooling system is defined by the input energy to the radiator fan. The cooling effect of the refrigeration system is defined by the input energy to a compressor of the refrigeration system. The arrangement makes it possible to select an appropriate distribution of the required cooling effect on the second cooling system and the refrigeration system. Preferably, the most energy efficient distribution is selected at which the total supply of input energy to the second cooling system and the refrigeration system is minimized.

According to an embodiment of the invention, the first cooling system comprises a single radiator having a first part cold by the first air flow and a second part cooled by the second coolant air flow. In this case, the different parts of the radiator may be cooled with different air flows rates from the two radiator fans. Alternatively, the first cooling system may comprises a first radiator cold by the first air flow and a second radiator cold by the second air flow. In some cases, it is more favorable to use two smaller radiators in the first cooling system instead of one large radiator.

According to an embodiment of the invention, the first cooling system comprises at least one bypass valve and a bypass line allowing a coolant flow past at least one radiator of the first cooling system. In this case, the first coolant will not be cooled in any radiator at all, in one of two radiators or in two of two radiators. In this manner, it is possible to vary the cooling of the first coolant and provide an adjusted cooling of the power electronics. The second cooling system also may comprise a bypass valve and a bypass line allowing a coolant flow past the radiator of the second cooling system. It is possible to circulate the second coolant in the second coolant system without cooling in the radiator when, for example, the electric energy storage has a too low temperature.

According to an embodiment of the invention, the arrangement comprises a heat exchanger providing heat transfer between the first coolant in the first cooling system and the second coolant in the second cooling system. In this case, it is possible to equalize the temperatures of the coolants in a position of the cooling systems. The existence of such a heat exchanger makes it possible to increase or decrease the temperature of the coolants in the both systems by supplying heat or cold to the coolant in one of the cooling systems. Said heat exchanger may be provided to transfer energy between the first coolant in a radiator outlet line of the first cooling system and the second coolant in a radiator outlet line of the second cooling system. In this position, the first coolant may be cooled to a relatively low temperature by the second coolant before it enters the power electronics. The second coolant can be cooled by the refrigeration system to a lower temperature than the first coolant by the refrigeration system before it enters the electrical energy storage. Furthermore, the radiator outlets line of the first cooling system and the second cooling systems are usually arranged close to each other in this position which facilitate the arrangement of the heat exchanger.

According to an embodiment of the invention, a radiator or a part of a radiator of the first cooling system is arranged in a downstream position of the radiator of the second cooling system with respect to the direction of the first air flow. In this case, the second coolant in the second cooling system will be cooled to a lower temperature than the first coolant in the first cooling system. Such a temperature difference between the first coolant and the second coolant is many times advantageous since the electric energy storage, which is cooled by the second coolant, usually needs to be cooled to a lower temperature than the power electronics, which is cooled by the first coolant.

According to an alternative embodiment of the invention, a radiator or a part of a radiator of the first cooling system is arranged in an upstream position of the radiator of the second cooling system with respect to the direction of the first air flow. When ambient air has a high temperature, the cooling effect of the ambient air is low. In this case, it is many times advantageous to use the first air flow to cool the first coolant in the first cooling system in order to ensure the cooling of the power electronics. In any event, the second coolant can be cooled by the refrigeration system in order to allow a suitable low temperature before it enters the electrical energy storage. On the other hand, when ambient air has a low temperature, the cooling efficiency of the ambient air is high. In this case, it is usually enough to cool the first coolant in the radiator by the second air flow. The radiator in the first air flow can be bypassed. As a consequence, the second coolant obtains a cooling in the downstream located radiator by air of ambient temperature.

According to an embodiment of the invention, a radiator or a part of a radiator of the first cooling system is arranged in a downstream position of the condenser of the refrigeration system with respect to the direction of the first air flow. Such an arrangement of the condenser and the radiator of the first cooling system is advantageous since the refrigerant usually needs to be cooled by air of a lower temperature than the first coolant in the first cooling system.

According to an embodiment of the invention, each radiator fans may be driven by an electric motor. The speed of an electric motor is easily adjustable and thus the speed of the radiator fans and the cooling air flow rates through the radiators and the condenser. The speed of the radiator fans may be controlled by a control unit. The control unit may receive information about the temperature of the an electric energy storage and power electronics and control the radiator fans in order to continuously maintain a suitable operating temperature of the electric energy storage and power electronics.

According to an embodiment of the invention, the first cooling system comprises a heat exchanger by which it is possible to heat the first coolant by an external heating source. During certain operating condition such after a cold start in a cold environment, the power electronics may have a too low temperature. In this case, a hot medium can be directed to the heat exchanger and to heat first coolant from a heating source. The first coolant heats in its turn the temperature of the power electronics to a suitable temperature level. A coolant cooling a heating source in the form of the electric machine may be used to heat the first coolant and the power electronics. The second cooling system may comprise a heat exchanger by which it is possible to heat the second coolant by a heating source. Thereby, it is possible to provide a quick heating of the electric energy storage in case it has a lower temperature than a minimum temperature. A coolant cooling a heating source in the form of a combustion engine may be used to heat the second coolant and the electric energy storage to a suitable temperature level.

According to an embodiment of the invention, the first radiator fan and the second radiator fan are positioned in the vehicle such that they provide first air flow and a second air flow which are adjacent, parallel and in the same direction. In this case, the radiator fans are arranged relatively close to each other at a surface of the vehicle. Preferably, the radiator fans are arranged at a front surface of the vehicle. In this position, the ram air will assist the radiator fans to provide the first air flow and the second air flow.

### BRIEF DESCRIPTION OF THE DRAWINGS

In the following preferred embodiments of the invention are described, as examples, and with reference to the attached drawings, in which:
- Fig. 1: shows a cooling arrangement according to a first embodiment of the invention,
- Fig. 2: shows a cooling arrangement according to a second embodiment of the invention,
- Fig. 3: shows a cooling arrangement according to a third embodiment of the invention and
- Fig. 4: shows a cooling arrangement according to a fourth embodiment of the invention.

### DETAILED DESCRIPTION OF PREFERRED EMBODIMENTS OF THE INVENTION

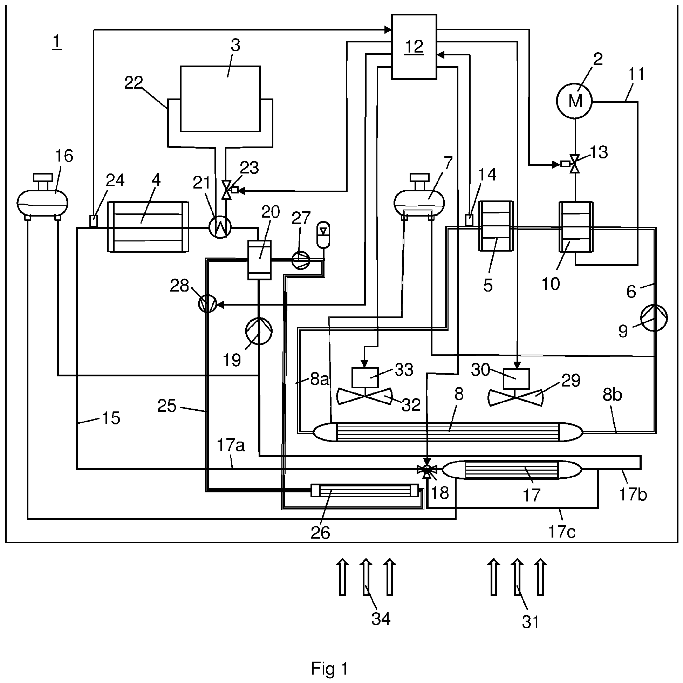

Fig. 1 shows a cooling arrangement for a schematically indicated hybrid vehicle 1. The hybrid vehicle 1 is a powered by an electric machine 2 and a combustion engine 3. The electric machine works alternately as motor and generator. The hybrid vehicle 1 comprises an electric energy storage 4 for storing of electrical energy and power electronics 5 for controlling the flow of electrical energy between the electrical energy storage 4and the electric machine 2. The electrical energy storage 4 and the power electronics 5 are design to work within a respective specific temperature range. The electrical energy storage 4 and the power electronics 5 are heated during operation. Thus, the electrical energy storage 4 and the power electronics 5 need to be cooled during operation. The power electronics 5 is designed to have a somewhat higher temperature than the electrical energy storage 4. During certain operating conditions such as after a cold start, the temperature of the electrical energy storage 4 and the power electronics 5 can be too low. In this case, it is suitable to heat the electrical energy storage 4 and the power electronics 5.

The hybrid vehicle 1 comprises a first cooling system 6 with a first circulating coolant. The first cooling system 6 comprises an expansion tank 7. The first coolant further comprises a radiator 8 where it is cooled. The first coolant enters the radiator 8 via a radiator inlet line 8a and leaves the radiator via a radiator outlet line 8b. The radiator outlet line 8b directs the first coolant to a pump 9. The pump 9 circulated the first coolant in the first cooling system 6. The pump 9 directs the first coolant to a heat exchanger 10 where the first coolant can be heated. In this case, a circuit 11, which is a part of a cooling system cooling which cools the electric machine 2, is used to heat the first coolant. A control unit 12 regulates the medium flow to the heat exchanger 10 by means of a control valve 13. Alternatively, an electric heater can be used to heat the first coolant. The first coolant leaving the heat exchanger 10 enters the power electronics 5. Primary, the first coolant is used to cool the power electronics 5 but it can also be used to heat the power electronics 5. A temperature sensor 14 measures the temperature of the first coolant leaving the heat exchanger 10. Finally, the first coolant is returned to the radiator 8.

The hybrid vehicle 1 comprises a second cooling system 15 with a second circulating coolant. The second cooling system 15 comprises an expansion tank 16. The second cooling system 6 further comprises a radiator 17 where it is cooled in a first step. The second coolant enters the radiator 17 via a radiator inlet line 17a and leaves the radiator 17 via a radiator outlet line 17b. The radiator inlet line 17a comprises a bypass valve 18. The bypass valve 18 can direct the second coolant to the radiator 17 or to a radiator bypass line 17c directing the second coolant past the radiator 17 and to the radiator outlet line 17b. The radiator outlet line 17b directs the second coolant to a pump 19. The pump 19 circulates the second coolant in the second cooling system 15.

The pump 19 directs the second coolant to a chiller 20 where the second coolant can be cooled in a second step. Thereafter the second coolant enters a heat exchanger 21 where the second coolant can be heated. In this case, a circuit 22, which is a part of a cooling system which cools the combustion engine 3, is used to heat the second coolant. The control unit 12 regulates the coolant flow to the heat exchanger 21 by means of a control valve 23. Alternatively, an electric heater can be used to heat the second coolant. The second coolant leaving the heat exchanger 21 enters the electrical energy storage 4. Primary, the second coolant is used to cool the electrical energy storage 4 but it can also be used to heat the electrical energy storage 4. A temperature sensor 24 measures the temperature of the second coolant when it leaves the electrical energy storage 4. Finally, the second coolant is returned to the radiator 17.

The hybrid vehicle 1 comprises a refrigeration system 25 with a circulating refrigerant.

The refrigeration system 25 comprises a condenser 26 where the refrigerant condenses. The liquefied refrigerant is directed to an expansion valve 27 where it experiences a pressure drop and a significantly lower temperature. Thereafter, the refrigerant enters an evaporator in the form of the chiller 20 of the second cooling system. The refrigerant is heated by the second coolant in the chiller 20 such that it vaporizes. The vaporized refrigerant is directed to a compressor 28. The compressor 28 provides a compression of the refrigerant. The refrigerant leaving the compressor 28 and entering the condenser 26 has an increased pressure and an increased temperature.

The hybrid vehicle 1 comprises a radiator fan 29 driven by an electric motor 30. The control unit 12 controls the electric motor 30 and the speed of the radiator fan 29. The radiator fan 29 provides a first air flow 31 through a half of the radiator 8 of the first cooling system and the radiator 17 of the second cooling system. The radiator 17 of the second cooling system is arranged in an upstream position of the half of the radiator 8 of the first cooling system 6 with respect to the flow direction of the first air flow 31. Thus, the second coolant is cooled to a lower temperature in the radiator 17 than the first coolant in the radiator 8. The hybrid vehicle 1 comprises a second radiator fan 32 driven by an electric motor 33. The control unit 12 controls the electric motor 33 and the speed of the second radiator fan 32. The second radiator fan 32 provides a second air flow 34 through a remaining half of radiator 8 of the first cooling system and the condenser 26 of the refrigeration system. The condenser 26 of the refrigerant system 25 is arranged in an upstream position of the half of the radiator 8 of the first cooling system 6 with respect to the flow direction of the second air flow 34. Usually, the refrigerant is cooled to a lower temperature in the condenser 26 than the first coolant in the radiator 8 but it depends on condenser load, condenser- and radiator performance.

During operation of the hybrid vehicle 1, the control unit 12 receives information about the temperature of the first coolant from the first temperature sensor 14 and information about the temperature of the second coolant from the second temperature sensor 24. The temperatures of the coolants are related to the temperatures of the electrical energy storage 4 and the power electronics 5. Alternatively, temperature sensors may be used which directly measures the temperatures of the electrical energy storage 4 and the power electronics 5. The control unit 12 controls the speed of the first radiator fan 29 and the second radiator fan 32 and thus the cooling of the first coolant in the radiator 8. The first coolant is cooled in the radiator 8 to a temperature at which it cools the power electronics 5. The control unit 12 controls by the speed of the second radiator fan 33 and the temperature of the second coolant leaving the radiator 17. The second coolant is cooled in a first step in the radiator 17 and in a second step in the chiller 20 before it cools the electrical energy storage 4.

In case the power electronics 5 has a too high temperature, the control unit 12 can increase the speed of the first fan 29 and/or the speed of the second fan 32 such that the first coolant is cooled to a lower temperature in the radiator 8. In case the power electronics 5 has a too low, or unnecessarily low temperature, the control unit 12 can reduce the actual speed of the radiator fan 29 and/or the actual speed of the second fan 32 such that the first coolant leaving the radiator is cooled to a somewhat higher temperature. Alternatively or in combination, the control unit 12 may open the valve 13 such that the medium cooling the electric machine 2 heats the first coolant before it reaches the power electronics 5.

In case the electrical energy storage 4 has a too high temperature, the control unit 12 can increase the speed of the first fan 29 such that the second coolant is cooled to a lower temperature in the radiator 17. Alternately or in combination, the control unit 12 can activate the compressor 28 and provide a cooling of the second coolant in a second step in the chiller 20 before it enters the electrical energy storage 4. In order to further increase the cooling of the second coolant, the control unit 12 can increase the actual speed of the radiator fan 32 such that the refrigerant receives a lower condensation temperature in the condenser 26 resulting in an increased cooling of the second coolant in the chiller 20. In case the electrical energy storage 4 has a too low temperature, the control unit 12 can reduce the actual speed of the first radiator fan 29 and the cooling of the second coolant the radiator 17. Alternatively, the control unit 12 can reduce the actual speed of the second radiator fan 32 and reduce the cooling of the refrigerant in the condenser 26. Furthermore, the control unit 12 can set the bypass valve 18 in a bypass position in which it directs the flow of the second coolant to the bypass line 17 and past the radiator 17. The control unit 12 also can shut off the compressor 28 of the compressor refrigeration system 25. As a result, the second coolant receives no cooling in the chiller 20. Finally, the control unit 12 may open the valve 23 such that the coolant cooling the combustion engine 3 heats the second coolant in the heat exchanger 21before it enters the electrical energy storage 4.

Consequently, the control unit 12 has a lot of options to regulate the temperatures of the first coolant and the second coolant before they cool the electrical energy storage 4 and the power electronics 5. The control unit 12 has access to information about the most energy efficient option during different temperatures of the electrical energy storage 4 and the power electronics 5. The control unit 12 selects the most energy efficient option to maintain or adjust the actual temperatures of the electrical energy storage 4 and the power electronics 5. The most energy efficient can be defined as a minimum supply of electric energy to the radiator fans 29, 30 and to the compressor 28 of the refrigeration system 25.

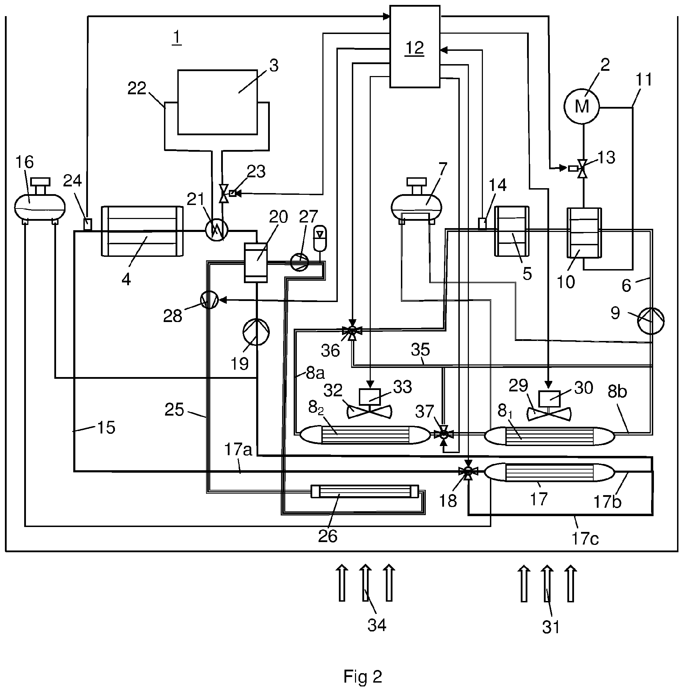

Fig 2 shows an alternative embodiment of the cooling arrangement. In this case, the radiator 8 has been divided into a two smaller radiators 8₁, 8₂. It is usually easier to find space for two smaller radiators 8₁, 8₂ than for a single large radiator 8.

Furthermore, the first cooling system comprises a bypass line 35, a first bypass valve 36 and a second bypass valve 37. The control unit 12 may set the first bypass valve 36 in a non- bypass position in which it directs the first coolant flow to the radiator 8₂ cooled by the second air flow 34 or in a bypass position in which it directs the first coolant flow past the radiator 8₁, 8₂. The control unit 12 may set the second bypass valve 37 in a non- bypass position in which it directs the first coolant flow to the radiator 8₁ cooled by the first air flow 31 or in a bypass position in which it directs the first coolant flow past the radiator 8₁ cooled by the first air flow 31. In this case, the control unit 12 achieves further option to regulate the temperature of the first coolant and the cooling/heating of the power electronics 5.

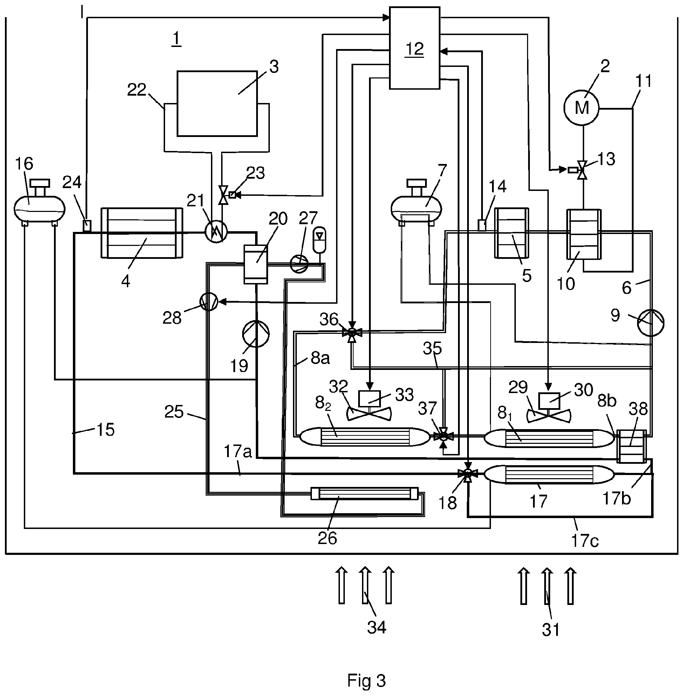

Fig 3 shows a further alternative embodiment of the cooling arrangement. In this case, a heat exchanger 38 is used to conduct heat energy between the first coolant in a radiator outlet line 8b and the second coolant in the radiator outlet line 17b. In this case, the temperature difference between the first coolant and the second coolant can be substantially eliminated. During operating conditions, when the electric machine 2 heats the first coolant in the heat exchanger 10, it is possible to heat the second coolant by the first coolant in the heat exchanger 38 and the electrical energy storage 4.

During operating conditions, when the electric machine 2 heats the second coolant in the heat exchanger 21, it is possible to heat the first coolant by the second coolant in the heat exchanger 38 and the power electronics 5.

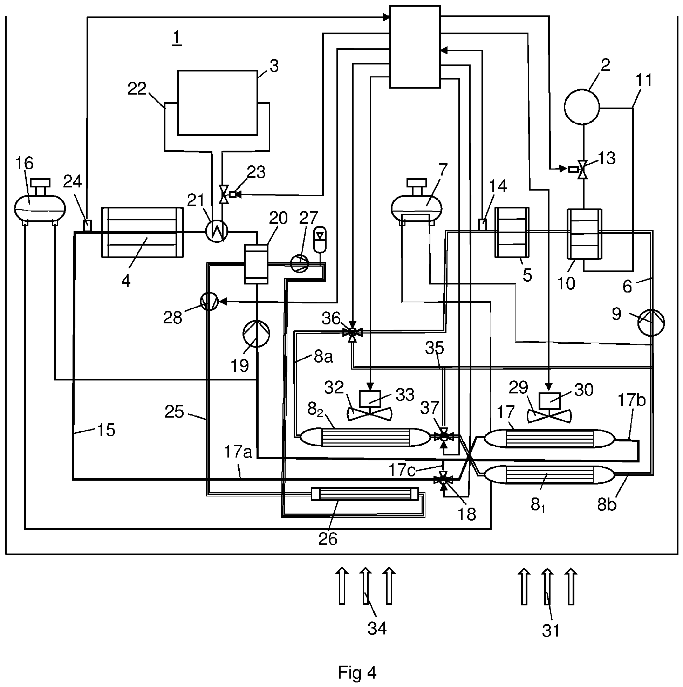

Fig. 4 shows a further alternative embodiment of the cooling arrangement. In this case, the radiators 8₁, 17 in the first air flow 31 have changed positions. As a consequence, the radiator 17 in the second cooling system 15 is arranged downstream of the radiator 8₁ in the first cooling system 6 with respect to the flow direction of the first air flow 31. When ambient air has a high temperature, the first air flow 31 provides an effective cooling of the first coolant in the upstream located radiator 8₁. However, there is in this case a risk that the first air flow heats the second coolant in the downstream located radiator 17. When such a risk exists, the second coolant is directed to the bypass line 17c and past the radiator 17. In this case, the second coolant is cooled to a low temperature in the chiller 20 by the refrigerant system. When the ambient air has a low temperature, the bypass valve 36 may direct the first coolant to the bypass line 35 and thus past the radiator 8₁. In this case, first coolant achieves necessary cooling in the radiator 8₂ by the second air flow 34. The first air flow 31 enters the downstream located radiator 17 at ambient air temperature and provide an effective cooling of the second coolant in the second cooling system 15.

The above mention embodiments of the cooling arrangement can be designed with relatively small changes from a base structure including two independently controlled cooling air flows 31, 34. Thus, it is relatively uncomplicated to arrange the radiators 8, 8₁, 8₂, 17 of the cooling systems 6, 15 and the condenser 26 of the refrigerant system in different positions in relation to each other in the first air flow 31 and the second air flow 34. Furthermore, it is easy to selectively arrange a heat exchanger 38 to the radiator outlet lines 8b, 17b which provides heat transfer between the coolants in the two cooling systems. Finally, it is possible to arrange a heat exchanger 10, 21or other kinds of heating element in the respective cooling system which heats the coolant.

The invention is in no way confined to the embodiment to which the drawings refer but may be varied freely within the scopes of the claims.

## Claims

1. Cooling arrangement for an electric power unit in a vehicle (1), wherein electric power unit comprises an electric machine (2), an electric energy storage (4) for storing of electrical energy and power electronics (5) for controlling the flow of electrical energy between the electrical energy store (4) and the electric machine (2), and wherein the cooling arrangement comprises a first cooling system (6) with a circulating first coolant cooling the power electronics (5) , a second cooling system (15) with a circulating second coolant cooling electric energy storage (4) and a refrigeration system (25) configured to cool the second coolant in the second cooling system (15) in a chiller (20) wherein said refrigeration system (25) comprises a condenser (26), **characterized in that** the cooling arrangement comprises a first radiator fan (29) configured to provide a first air flow (31) both through at least a part of a radiator (8, 8₁) of the first cooling system (6) and through a radiator (17) of the second cooling system (15) but not through said condenser (26), and a second radiator fan (32) configured to provide a second air flow (34) both through at least a part of the radiator (8, 8₂) of the first cooling system (6) and through said condenser (26), but not through said radiator (17) of the second cooling system.

2. Cooling arrangement according to claim 1, **characterized in that** the first cooling system (6) comprises a single radiator (8) having a first part cooled by the first air flow (31) and a second part cooled by the second air flow (34).

3. Cooling arrangement according to claim 1, **characterized in that** the first cooling system comprises a first radiator (8₁) cooled by the first air flow (31) and a second radiator (8₂) cooled by the second air flow (34).

4. Cooling arrangement according to claim 3, **characterized in that** the first cooling system (6) comprises at least one bypass valve (36, 37) and a bypass line (35) allowing a coolant flow past at least one radiator (8₁, 8₂) of the first cooling system (6).

5. Cooling arrangement according to any one of the preceding claims, **characterized in that** the second cooling system (15) comprises a bypass valve (18) and a bypass line (17c) allowing a coolant flow past the radiator (17) of the second cooling system (15).

6. Cooling arrangement according to any one of the preceding claims, **characterized in that** it comprises a heat exchanger (38) providing heat transfer between the first coolant in the first cooling system (6) and the second coolant in the second cooling system (15).

7. Cooling arrangement according to claim 6, **characterized in that** said heat exchanger (38) provides heat transfer between the first coolant in a radiator outlet line (8b) of the first cooling system (6) and the second coolant in a radiator outlet line (17b) of the second cooling system (15).

8. Cooling arrangement according to any one of the preceding claims, **characterized in that** a radiator (8i) or a part of a radiator (8) of the first cooling system (6) is arranged in a downstream position of the radiator (17) of the second cooling system (15) with respect to the flow direction of the first air flow (31).

9. Cooling arrangement according to any one of the preceding claims 1-7, **characterized in that** a radiator (8₁) or a part of a radiator (8) of the first cooling system (6) is arranged in an upstream position of the radiator (17) of the second cooling system (15) with respect to the flow direction of the first air flow (31).

10. Cooling arrangement according to any one of the preceding claims, **characterized in that** a radiator (8₂) or a part of a radiator (8) of the first cooling system (6) is arranged in a downstream position of the condenser (26) of the refrigeration system with respect to the flow direction of the first air flow (31).

11. Cooling arrangement according to any one of the preceding claims, **characterized in that** each radiator fans (29, 32) is driven by an electric motor (30, 33).

12. Cooling arrangement according to claim 11, **characterized in that** the speed of the radiator fans (29, 32) are controlled by a control unit (12).

13. Cooling arrangement according to any one of the preceding claims, **characterized in that** the first cooling system (6) comprises a heat exchanger (10) by which it is possible to heat the first coolant by an external heating source (3).

14. Cooling arrangement according to any one of the preceding claims, **characterized in that** the second cooling system (15) comprises a heat exchanger (21) by which it is possible to heat the second coolant by an external heating source (3).

15. Cooling arrangement according to any one of the preceding claims, **characterized in that** the first radiator fan (29) and the second radiator fan (32) are positioned in the vehicle (1) such that they provide a first air flow (31) and a second air flow (34) which are adjacent, parallel and in the same direction.

## Patentansprüche

1. Kühlanordnung für eine elektrische Leistungseinheit in einem Fahrzeug (1), wobei die elektrische Leistungseinheit eine elektrische Maschine (2), einen elektrischen Energiespeicher (4) zum Speichern von elektrischer Energie und Leistungselektronik (5) zur Steuerung des Flusses elektrischer Energie zwischen der elektrischen Speichervorrichtung (4) und der elektrischen Maschine (2) umfassen kann und wobei die Kühlanordnung ein erstes Kühlsystem (6) mit einem zirkulierenden ersten Kühlmittel, das die Leistungselektronik (5) kühlt, ein zweites Kühlsystem (15) mit einem zirkulierenden zweiten Kühlmittel, das die elektrische Speichervorrichtung (4) und ein Kältesystem (25) umfasst, das dazu eingerichtet ist, das zweite Kühlmittel im zweiten Kühlsystem (15) in einem Kältekompressor (20) zu kühlen, wobei das Kältesystem (25) einen Kondensator (26) umfasst, **dadurch gekennzeichnet, dass** die Kühlanordnung einen ersten Kühlerlüfter (29) umfasst, der dazu eingerichtet ist, einen ersten Luftstrom (31) durch sowohl mindestens einen Teil des Kühlers (8, 8₁) des ersten Kühlsystems (6) als auch durch einen Kühler (17) des zweiten Kühlsystems (15) aber nicht durch den Kondensator (26) zu leiten und einen zweiten Kühlerlüfter (32), der dazu eingerichtet ist, einen zweiten Luftstrom (34) durch sowohl wenigsten einen Teil des Kühlers (8, 8₂) des ersten Kühlsystems (6) und durch den Kondensator (26) aber nicht durch den Kühler (17) des zweiten Kühlsystems zu leiten.

2. Kühlanordnung nach Anspruch 1, **dadurch gekennzeichnet, dass** das erste Kühlsystem (6) einen einzelnen Kühler (8) umfasst, dessen erster Teil durch den ersten Luftstrom (31) gekühlt wird und dessen zweiter Teil durch den zweiten Luftstrom (34) gekühlt wird.

3. Kühlanordnung nach Anspruch 1, **dadurch gekennzeichnet, dass** das erste Kühlsystem einen ersten Kühler (81) umfasst, der durch den ersten Luftstrom (31) gekühlt wird und einen zweiten Kühler (82), der durch den zweiten Luftstrom (34) gekühlt wird.

4. Kühlanordnung nach Anspruch 3, **dadurch gekennzeichnet, dass** das erste Kühlsystem (6) wenigstens ein Umgehungsventil (36, 37) und eine Umgehungsleitung (35) umfasst, die einen Kühlmittelfluss vorbei an wenigstens einem Kühler (81, 82) des ersten Kühlsystems (6) ermöglicht.

5. Kühlanordnung nach einem der vorangehenden Ansprüche, **dadurch gekennzeichnet, dass** das zweite Kühlsystem (15) wenigstens ein Umgehungsventil (18) und eine Umgehungsleitung (17c) umfasst, die einen Kühlmittelfluss vorbei an dem Kühler (17) des zweiten Kühlsystems (15) ermöglicht.

6. Kühlanordnung nach einem der vorangehenden Ansprüche, **dadurch gekennzeichnet, dass** es einen Wärmetauscher (38) umfasst, der eine Wärmeübertragung zwischen dem ersten Kühlmittel in dem ersten Kühlsystem (6) und dem zweiten Kühlmittel in dem zweiten Kühlsystem (15) bereitstellt.

7. Kühlanordnung nach Anspruch 6, **dadurch gekennzeichnet, dass** der Wärmetauscher (38) eine Wärmeübertragung zwischen dem ersten Kühlmittel in einer Kühlerauslassleitung (8b) des ersten Kühlsystems (6) und dem zweiten Kühlmittel in einer Kühlerauslassleitung (17b) des zweiten Kühlsystems (15) vorsieht.

8. Kühlanordnung nach einem der vorangehenden Ansprüche, **dadurch gekennzeichnet, dass** ein Kühler (81) oder ein Teil eines Kühlers (8) des ersten Kühlsystems (6) stromabwärts des Kühlers (17) des zweiten Kühlsystems (15) in Flussrichtung des ersten Luftstroms (31) positioniert ist.

9. Kühlanordnung nach einem der vorangehenden Ansprüche 1-7, **dadurch gekennzeichnet, dass** ein Kühler (81) oder ein Teil eines Kühlers (8) des ersten Kühlsystems (6) stromaufwärts des Kühlers (17) des zweiten Kühlsystems (15) in Flussrichtung des ersten Luftstroms (31) positioniert ist.

10. Kühlanordnung nach einem der vorangehenden Ansprüche, **dadurch gekennzeichnet, dass** ein Kühler (82) oder ein Teil eines Kühlers (8) des ersten Kühlsystems (6) stromabwärts des Kondensators (26) des Kältesystems in Flussrichtung des ersten Luftstroms (31) positioniert ist.

11. Kühlanordnung nach einem der vorangehenden Ansprüche, **dadurch gekennzeichnet, dass** jeder Kühlerlüfter (29, 32) durch einen Elektromotor (30, 33) angetrieben wird.

12. Kühlanordnung nach Anspruch 11, **dadurch gekennzeichnet, dass** die Geschwindigkeit der Kühlerlüfter (29, 32) durch eine Steuereinheit (12) gesteuert wird.

13. Kühlanordnung nach einem der vorangehenden Ansprüche, **dadurch gekennzeichnet, dass** das erste Kühlsystem (6) einen Wärmetauscher (10) umfasst, der es ermöglicht, das erste Kühlmittel durch eine externe Wärmequelle (3) zu erhitzen.

14. Kühlanordnung nach einem der vorangehenden Ansprüche, **dadurch gekennzeichnet, dass** das zweite Kühlsystem (15) einen Wärmetauscher (21) umfasst, der es ermöglicht, das zweite Kühlmittel durch eine externe Wärmequelle (3) zu erhitzen.

15. Kühlanordnung nach einem der vorangehenden Ansprüche, **dadurch gekennzeichnet, dass** der erste Kühlerlüfter (29) und der zweite Kühlerlüfter (32) in dem Fahrzeug (1) so positioniert sind, dass sie einen ersten Luftstrom (31) und einen zweiten Luftstrom (34) ermöglichen, die nebeneinander, parallel und in dieselbe Richtung verlaufen.

## Revendications

1. Agencement de refroidissement pour une unité de puissance électrique dans un véhicule (1), dans lequel l'unité d'alimentation électrique comprend une machine électrique (2), un stockage d'énergie électrique (4) pour stocker de l'énergie électrique et une électronique de puissance (5) pour réguler le flux d'énergie électrique entre le stockage d'énergie électrique (4) et la machine électrique (2), et dans lequel l'agencement de refroidissement comprend un premier système de refroidissement (6) avec un premier liquide de refroidissement en circulation qui refroidit l'électronique de puissance (5), un deuxième système de refroidissement (15) avec un deuxième liquide de refroidissement en circulation qui refroidit le stockage d'énergie électrique (4) et un système de réfrigération (25) configuré pour refroidir le deuxième liquide de refroidissement dans le deuxième système de refroidissement (15) dans un refroidisseur (20) dans lequel ledit système de réfrigération (25) comprend un condenseur (26), **caractérisé en ce que** l'agencement de refroidissement comprend un premier ventilateur de radiateur (29) configuré pour fournir un premier flux d'air (31) à la fois à travers au moins une partie d'un radiateur (8, 8₁) du premier système de refroidissement (6) et à travers un radiateur (17) du deuxième système de refroidissement (15) mais pas à travers ledit condenseur (26), et un deuxième ventilateur de radiateur (32) configuré pour fournir un deuxième flux d'air (34) à la fois à travers au moins une partie du radiateur (8, 82) du premier système de refroidissement (6) et à travers ledit condenseur (26), mais pas à travers ledit radiateur (17) du deuxième système de refroidissement.

2. Agencement de refroidissement selon la revendication 1, **caractérisé en ce que** le premier système de refroidissement (6) comprend un radiateur unique (8) ayant une première partie refroidie par le premier flux d'air (31) et une deuxième partie refroidie par le deuxième flux d'air (34).

3. Agencement de refroidissement selon la revendication 1, **caractérisé en ce que** le premier système de refroidissement comprend un premier radiateur (8₁) refroidi par le premier flux d'air (31) et un deuxième radiateur (8₂) refroidi par le deuxième flux d'air (34).

4. Agencement de refroidissement selon la revendication 3, **caractérisé en ce que** le premier système de refroidissement (6) comprend au moins une soupape de dérivation (36, 37) et une conduite de dérivation (35) permettant un flux de liquide de refroidissement devant au moins un radiateur (8₁, 8₂) du premier système de refroidissement (6).

5. Agencement de refroidissement selon l'une quelconque des revendications précédentes, **caractérisé en ce que** le deuxième système de refroidissement (15) comprend une soupape de dérivation (18) et une conduite de dérivation (17c) permettant un flux de liquide de refroidissement devant le radiateur (17) du deuxième système de refroidissement (15).

6. Agencement de refroidissement selon l'une quelconque des revendications précédentes, **caractérisé en ce qu'**il comprend un échangeur de chaleur (38) fournissant un transfert de chaleur entre le premier liquide de refroidissement dans le premier système de refroidissement (6) et le deuxième liquide de refroidissement dans le deuxième système de refroidissement (15).

7. Agencement de refroidissement selon la revendication 6, **caractérisé en ce que** ledit échangeur de chaleur (38) fournit un transfert de chaleur entre le premier liquide de refroidissement dans une conduite de sortie de radiateur (8b) du premier système de refroidissement (6) et le deuxième liquide de refroidissement dans une conduite de sortie de radiateur (17b) du deuxième système de refroidissement (15).

8. Agencement de refroidissement selon l'une quelconque des revendications précédentes, **caractérisé en ce qu'**un radiateur (8₁) ou une partie d'un radiateur (8) du premier système de refroidissement (6) sont agencés dans une position en aval du radiateur (17) du deuxième système de refroidissement (15) par rapport au sens d'écoulement du premier flux d'air (31).

9. Agencement de refroidissement selon l'une quelconque des revendications 1 à 7, **caractérisé en ce qu'**un radiateur (8₁) ou une partie d'un radiateur (8) du premier système de refroidissement (6) sont agencés dans une position en amont du radiateur (17) du deuxième système de refroidissement (15) par rapport au sens d'écoulement du premier flux d'air (31).

10. Agencement de refroidissement selon l'une quelconque des revendications précédentes, **caractérisé en ce qu'**un radiateur (82) ou une partie d'un radiateur (8) du premier système de refroidissement (6) sont agencés dans une position en aval du condenseur (26) du système de réfrigération par rapport au sens d'écoulement du premier flux d'air (31).

11. Agencement de refroidissement selon l'une quelconque des revendications précédentes, **caractérisé en ce que** chaque ventilateur de radiateur (29, 32) est entraîné par un moteur électrique (30, 33).

12. Agencement de refroidissement selon la revendication 11, **caractérisé en ce que** la vitesse des ventilateurs de radiateur (29, 32) est régulée par une unité de régulation (12).

13. Agencement de refroidissement selon l'une quelconque des revendications précédentes, **caractérisé en ce que** le premier système de refroidissement (6) comprend un échangeur de chaleur (10) par lequel il est possible de chauffer le premier liquide de refroidissement par une source de chauffage externe (3).

14. Agencement de refroidissement selon l'une quelconque des revendications précédentes, **caractérisé en ce que** le deuxième système de refroidissement (15) comprend un échangeur de chaleur (21) par lequel il est possible de chauffe le deuxième liquide de refroidissement par une source de chauffage externe (3).

15. Agencement de refroidissement selon l'une quelconque des revendications précédentes, **caractérisé en ce que** le premier ventilateur de radiateur (29) et le deuxième ventilateur de radiateur (32) sont positionnés dans le véhicule (1) de telle sorte qu'ils fournissent un premier flux d'air (31) et un deuxième flux d'air (34) qui sont adjacents, parallèles et dans le même sens.
